Europäisches Patentamt

European Patent Office

Office européen des brevets

(19)

(11) Numéro de publication: **0 249 537**
**B1**

(12) # FASCICULE DE BREVET EUROPEEN

(45) Date de publication du fascicule du brevet:
22.08.90

(51) Int. Cl.⁵: **B60G 21/04**

(21) Numéro de dépôt: **87401259.4**

(22) Date de dépôt: **04.06.87**

(54) **Essieu arrière de véhicule automobile.**

(30) Priorité: **10.06.86 FR 8608620**

(43) Date de publication de la demande:
**16.12.87 Bulletin 87/51**

(45) Mention de la délivrance du brevet:
**22.08.90 Bulletin 90/34**

(84) Etats contractants désignés:
**DE ES GB IT**

(56) Documents cités:
**EP-A- 0 133 829**
**DE-A- 2 425 740**
**FR-A- 776 562**
**US-A- 4 429 899**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Penot, Jean, 127, avenue de la République, F-94800 Villejuif(FR)**

(74) Mandataire: **Boivin, Claude, 9, rue Edouard-Charton, F-78000 Versailles(FR)**

ACTORUM AG

## Description

On connaît des essieux comportant des bras de roues oscillants reliés par une traverse semi-rigide présentant une section par exemple on forme de croix ou en V; généralement les essieux sont réalisés à partir de plusieurs feuillards soudés les uns aux autres.

La présente invention a pour objet un essieu arrière de ce genre qui présente une rigidité optimale, en particulier grande dans un plan horizontal et dans un plan vertical et faible en torsion.

L'essieu selon l'invention est caractérisé en ce que la traverse présente une section en forme de Y dont la branche inférieure est orientée de manière que le plan de symétrie passant par cette branche passe également par la droite reliant les points de contact des roues avec le sol. Dans un mode de réalisation avantageux de l'invention, l'essieu est monobloc et réalisé par déformation d'un tube de section circulaire.

On a décrit ci-après, à titre d'exemple non limitatif, un mode de réalisation de l'essieu selon l'invention, avec référence au dessin annexé dans lequel :

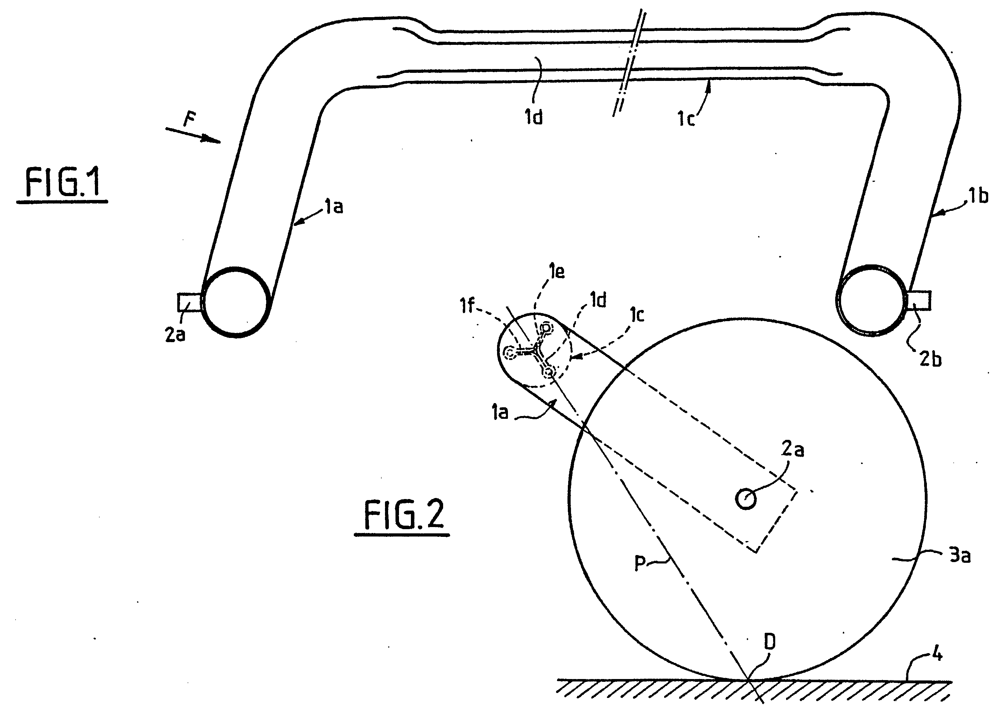

La Figure 1 est une vue en perspective de l'essieu;

La Figure 2 en est une vue latérale suivant la flèche F de la Figure 1.

Tel qu'il est représenté au dessin, l'essieu arrière comprend deux bras de roue oscillants 1a et 1b reliés l'un à l'autre par une traverse semi-rigide 1c. Chacun des bras porte un axe 2a ou 2b pour une roue telle que 3a.

L'essieu est réalisé monopièce à partir d'un tube de section circulaire. La traverse 1c a une section en forme de Y obtenue par une déformation du tube. La branche inférieure 1d de cette section est orientée de manière que le plan de symétrie P passant par cette branche passe également par la droite D joignant les points de contact des roues avec le sol 4, c'est-à-dire par les projections verticales des axes 2a et 2b.

La section en Y de la traverse 1c permet par rapport à une section en croix de masse équivalente d'augmenter le moment d'inertie en flexion de cette traverse et de diminuer son moment d'inertie en torsion. Du fait de l'orientation de cette section, on obtient un module de flexion maximal dans les zones travaillant en traction sous l'effet des efforts transversaux, qui s'exercent sur les roues dans la direction de la droite D, c'est-à-dire dans les branches supérieures 1e et 1f de la traverse; la contrainte de flexion est ainsi minimale. La traverse 1c est très rigide dans le plan horizontal ainsi que dans le plan vertical; les déformations correspondant respectivement à une variation en ouverture et à une variation en carrossage sont ainsi relativement faibles.

De plus, comme toute la traverse travaille en torsion, la rigidité de l'essieu est inversement proportionnelle à la longueur de la partie travaillante. Il est donc facile d'augmenter la retenue en roulis en diminuant cette longueur.

Il va de soi que la présente invention ne doit pas être considérée comme limitée au mode de réalisation décrite et représenté, mais en couvre, au contraire, toutes les variantes.

## Revendications

1. Essieu arrière comportant des bras de roue oscillants (1a et 1b), reliés par une traverse semi-rigide (1c), caractérisé en ce que la traverse (1c) présente une section en forme de Y dont la branche inférieure (1d) est orientée de manière que le plan de symétrie P passant par cette branche (1d) passe également par la droite D reliant les points de contact des roues avec le sol.

2. Essieu arrière selon la revendication 1, caractérisé en ce qu'il est monobloc et réalisé par déformation d'un tube de section circulaire.

## Patentansprüche

1. Hinterachse mit zwei schwingenden Radführungsarmen (1a und 1b), welche durch eine halbstarre Traverse (1c) verbunden sind, dadurch gekennzeichnet, daß die Traverse (1c) einen Querschnitt in Form eines Y aufweist, dessen unterer Schenkel (1d) so ausgerichtet ist, daß die durch diesen Schenkel (1d) hindurchgehende Symmetrieebene P ebenfalls durch die Gerade D hindurchgeht, welche die Berührungspunkte der Räder mit dem Boden verbindet.

2. Hinterachse nach Anspruch 1, dadurch gekennzeichnet, daß sie einstückig ausgebildet und durch Verformung eines Rohres mit kreisförmigem Querschnitt hergestellt ist.

## Claims

1. Rear axle comprising swinging wheel arms (1a and 1b) connected together by a semi rigid cross-piece (1c), characterized in that the cross-piece (1c) has a Y shaped cross section whose lower leg (1d) is oriented so that the plane of symmetry P passing through this leg (1d) also passes through the straight line D connecting together the points of contact of the wheels with the ground.

2. Rear axle according to claim 1, characterized in that it is formed as a single piece by deformation of a circular section tube.

FIG.1

FIG.2

EP 0 249 537 B1